# EUROPÄISCHE PATENTSCHRIFT

(11) **EP 2 710 319 B1**
(45) Veröffentlichungstag und Bekanntmachung des Hinweises auf die Patenterteilung: **31.10.2018**
(21) Anmeldenummer: 12723157.9
(22) Anmeldetag: 16.05.2012
(51) Int. Cl.: F28F 9/02, B21D 53/02, B23P 15/26, F28D 1/053, F28F 1/10

(54) **WÄRMETAUSCHER**
HEAT EXCHANGER
ÉCHANGEUR DE CHALEUR

(30) Priorität: 20.05.2011 DE 102011076225
(43) Veröffentlichungstag der Anmeldung: 26.03.2014
(73) Patentinhaber: MAHLE Behr GmbH & Co. KG, 70469 Stuttgart (DE)
(72) Erfinder: KURZ, Volker, 70499 Stuttgart (DE); ROUHANA, Hicham, 70825 Korntal-Münchingen (DE); BRÖDER, Haymo, 71229 Leonberg (DE)
(74) Vertreter: Grauel, Andreas
(86) Internationale Anmeldenummer: PCT/EP2012/059212
(87) Internationale Veröffentlichungsnummer: WO 2012/159971

(56) Entgegenhaltungen:
- EP-A2- 1 972 879
- WO-A1-2005/085738
- WO-A1-2008/071362
- DE-A1-102005 058 177
- FR-A1- 2 270 471
- US-A1- 2009 255 657

## Beschreibung

Die Erfindung betrifft einen Wärmetauscher gemäß dem Oberbegriff des Anspruchs 1 sowie ein Verfahren zur Herstellung eines Wärmetauschers, insbesondere einer Sammelplatte für einen Wärmetauscher gemäß der Ansprüche 6 und 7. WO 2008/071362 offenbart einen Wärmetauscher nach dem Oberbegriff des Anspruchs 1.

Aufgabe eines Wärmetauschers ist der Wärmeaustausch zwischen zwei Medien. Das zu erwärmende bzw. abzukühlende Medium kann einen flüssigen oder gasförmigen Aggregatszustand haben bzw. während dem Durchströmen des Wärmetauschers eine Aggregatszustandsänderung erfahren. Ein Wärmeübertrager besteht zumeist aus einer Rohr/Wellrippen-Matrix sowie Sammelbehältern mit Sammelplatten, welche die Rohre aufnehmen. Für die Rohr/Wellrippen-Matrix kann ein extrudiertes oder geschweißtes oder gefaltetes Rund- bzw. Flachrohr eingesetzt werden. Die Sammelbehälter werden häufig aus zwei Einzelteilen (Halbschalen oder Kastenteile) gebildet und haben Stutzen für die Aufnahme der Anschlussrohre. Die untere Halbschale hat Durchzüge, welche die durchströmten Rohre aufnehmen.

Ein gattungsgemäßer Wärmetauscher wird beispielsweise in der WO 2009149838 A1 offenbart. Dieser Wärmetauscher, insbesondere Wärmetauscher für ein Kraftfahrzeug, umfasst eine Vielzahl an Rohren, wenigstens ein Sammelrohr mit einer Wandung und Öffnungen in der Wandung und an den Öffnungen. Von der Wandung sind in axialer Richtung der Öffnungen abstehende Durchzüge ausgebildet. Die Rohre sind im Bereich eines Endes der Rohre teilweise an den Durchzügen angeordnet, sodass eine fluiddichte Verbindung zwischen den Durchzügen und den Rohren besteht.

Ein gattungsgemäßer Sammler für Wärmetauscher wird auch in der DE 10 2004 040 988 A1 offenbart. Der Sammler umfasst u.a. einen ebenen Basisbereich und ein Paar Stufenbereiche, die mit einer geraden oder gekrümmten Kontur zur Ebene des Basisbereichs abgewinkelt sind. Der Sammler ist über seine Länge mit einer Vielzahl von im Abstand zueinander befindlichen parallelen Schlitzen ausgestattet. Jeder Schlitz ist mit einer sich über die Breite des Basisbereichs erstreckenden länglichen Sektion und Endsektionen, die von der länglichen Sektion in die Stufenbereiche des Sammlers hineinragt, ausgestattet.

Der Bodendurchzug bzw. die Rohröffnung in welche die Rohrenden eingesteckt werden sind beim Stand der Technik durchgerissen oder gelocht. Der Durchzug selbst bietet relativ wenig Anlage- und Abstützfläche, insbesondere an den Rohrschmalseiten. Aufgrund der Herstellungsverfahren bzw. der Ausführungsform ist beim Löten oder Schweißen des Durchzugs mit den Rohrenden die Rohrschmalseite die thermisch am höchsten belastete Stelle. Insofern steigt bei zunehmender Thermobeanspruchung die Spannung im Bereich der Verbindungsstelle Rohrbodenverbindung und vor allem Rohrschmalseite erheblich an. Daraus resultiert ein häufiger Frühabbruch bzw. Riss an der betreffenden Verbindungsstelle.

Der Erfindung liegt die Aufgabe zugrunde, einen insbesondere bezüglich der Thermobeanspruchung verbesserten Wärmetauscher zu schaffen.

Diese Aufgabe wird gelöst durch einen Wärmetauscher mit den Merkmalen des Anspruchs 1. Vorteilhafte Ausgestaltungen sind Gegenstand der Unteransprüche.

Gelöst wird die Aufgabe erfindungsgemäß dadurch, dass sich ein jeder Kragen ausgehend von einer geraden Basisebene auf der Rückseite der Wand in Richtung des Sammelbehälters erstreckt. Die Kragen erstrecken sich somit nicht wie aus dem Stand der Technik bekannt von der Vorderseite in Richtung Rohrbündel sondern sind vielmehr auf der Rückseite der Sammelplatte angeordnet und erstrecken sich somit von der Wand in Richtung Sammelbehälter. Durch die erfindungsgemäße Ausbildung und Anordnung der Kragen können insbesondere die Rohrschmalseiten entlastet werden, indem die Spannungsspitzen und die Dehnungskräfte die durch das Aufwärmen der Rohre entstehen umgeleitet werden.

Die erfindungsgemäße Lösung kann für alle Arten von Wärmetauschern, insbesondere im Fahrzeugbau, verwendet werden. Insbesondere für Wärmetauscher mit gelöteten und/oder geschweißten Sammelbehältern aber auch für Wärmetauscher mit einem Sammelbehälter aus Kunststoff.

Die Erfindung sieht vor, dass jeder Kragen im Anlagebereich der Rohrschmalseite einen sich von der Basisebene schräg nach oben und außen verlaufenden bzw. erhabenen Endbereich auf der Rückseite der Wand definiert.

Durch den schräg nach oben und außen verlaufenden bzw. erhabenen Endbereich auf der Rückseite der Wand ergibt sich eine gleichzeitige Vertiefung des Endbereichs gegenüber der ansonsten im Wesentlichen geraden Vorderseite. Diese Vertiefung kann bei einem Löt- oder Schweißvorgang als zusätzliche Füllfläche dienen und sich insofern besonders vorteilhaft um die Rohrschmalseite legen.

Eine Ausführungsform sieht vor, dass sich durch das Einbringen der Durchzüge im Anlagebereich zu den Rohren eine Durchzugs-Kontakt-Fläche ausbildet, wobei die Durchzugs-Kontakt-Fläche zumindest geringfügig gekrümmt ausgebildet sein kann.

Eine weitere bevorzugte Ausführungsform sieht vor, dass sich durch das Einbringen der Durchzüge im Anlagebereich zu den Rohren eine Durchzugs-Kontakt-Fläche ausbildet, wobei die Durchzugs-Kontakt-Fläche Trapezförmig ausgebildet sein kann.

Die Erfindung betrifft ferner ein erfindungsgemäßes Verfahren zur Herstellung von Wärmetauschern, insbesondere einer Sammelplatte, mit den Schritten Einformen bzw. Einbringen einer wannenförmigen Vertiefung in die Sammelplatte in Richtung des Rohrbündels, anschließendes Zurückformen zumindest eines Teilbereiches der Vertiefung in Richtung Sammelbehälter sowie letztendlich Einformen bzw. Einbringen der Durchzüge in Richtung Sammelbehälter. Denkbar ist ferner die zweiten und dritten Verfahrensschritte zu vertauschen, sodass es bereits im zweiten Verfahrensschritt zum Einformen bzw. Einbringen der Durchzüge in Richtung Sammelbehälter und erst im dritten Verfahrensschritt zum Zurückformen zumindest eines Teilbereiches der Vertiefung in Richtung Sammelbehälter kommen kann.

Erfindungswesentlich ist, dass sich der Kragen immer auf der Rückseite der Sammelplatte bzw. Wandung erstreckt bzw. sich immer von einer geraden Bezugsebene auf der Rückseite in Richtung des Sammelbehälters erstreckt.

In einer ergänzenden Variante ist vorgesehen das im zweiten Verfahrensschritt (Anspruch 6) bzw. im dritten Verfahrensschritt (Anspruch 7) lediglich die Ebene zwischen den Durchzügen in Richtung Sammelbehälter zurückgeformt wird.

In einer ergänzenden Variante kann sich durch das Zurückformen zumindest eines Teilbereiches der wannenförmigen Vertiefung die gerade verlaufende Basisebene ausbilden. Insbesondere ist dieser Teilbereich der zwischen zwei benachbarten Durchzügen verlaufende Materialabschnitt.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung beschrieben ist. Dabei können die in den Ansprüchen und in der Beschreibung erwähnten Merkmale jeweils einzeln für sich oder in beliebiger Kombination erfindungswesentlich sein.

Es zeigen:
- **Fig. 1**: einen schematisch dargestellten Teilbereich einer Sammelplatte mit integrierten Rohrenden;
- **Fig. 2**: die Sammelplatte gem. Fig. 1 in einer Rückansicht;
- **Fig. 3**: schematisch dargestellte Verfahrensschritte A bis C zur Herstellung einer Sammelplatte gem. Fig. 1.

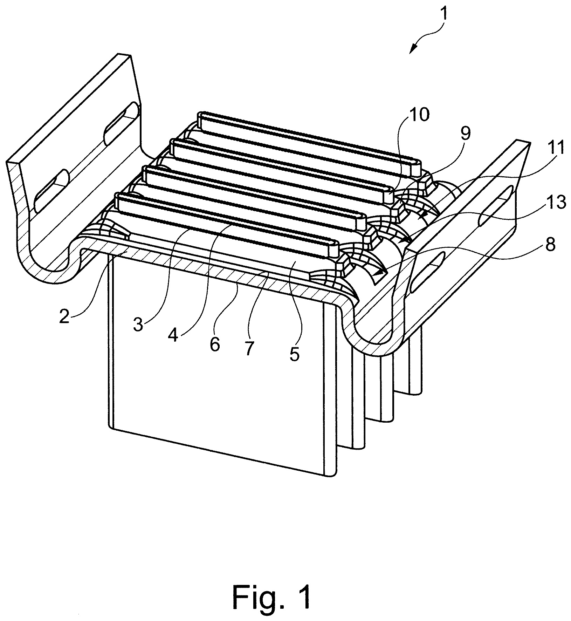

Fig. 1 zeigt in schematischer Darstellung einen Teilbereich einer verkürzt dargestellten Sammelplatte 1. Die Sammelplatte 1 weist eine Wand 2 auf, in die Durchzüge 3 (gleiche Bauteile weisen gleiche Bezugszeichen auf) eingebracht sind, die die Enden von Rohren 4 eines Bündels aufnehmen. Die Wand 2 der Sammelplatte 1 ist so gestaltet, dass sie zum Zweck einer Löt- oder Schweißverbindung mit den Rohren 4 Kragen 5 um die Durchzüge 3 herum bildet, wobei die Wand 2 eine dem Rohrbündel zugewandte Vorderseite 6 und eine dem nicht näher dargestellten Sammelbehälter zugewandte Rückseite 7 aufweist.

Dabei erstreckt sich ein jeder Kragen 5 ausgehend von einer geraden Basisebene 8 auf der Rückseite 7 der Wand 2 in Richtung des Sammelbehälters. Jeder Kragen 5 definiert im Anlagebereich 9 der Rohrschmalseite 10 einen sich von der Basisebene 8 schräg nach oben und außen verlaufenden bzw. erhabenen Endbereich 11 auf der Rückseite 7 der Wand 2. Der erhabene Endbereich 11 entsteht dadurch, dass lediglich die Zwischenbereiche 13 benachbarter Durchzüge 3 zurückgeformt werden.

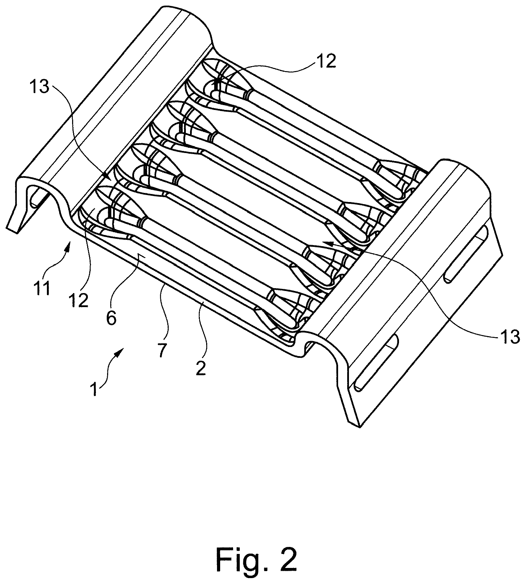

Fig. 2 zeigt die Sammelplatte 1 in einer Rückansicht. Gut zu erkennen ist, dass sich durch den schräg nach oben und außen verlaufenden bzw. erhabenen Endbereich 11 auf der Rückseite 7 der Wand 2 eine gleichzeitige Vertiefung 12 des Endbereichs 11 gegenüber der ansonsten im Wesentlichen geraden Vorderseite 6 ergibt.

Die Vertiefung 12 entsteht dadurch, dass lediglich die Zwischenbereiche 13 benachbarter Durchzüge 3 zurückgeformt werden.

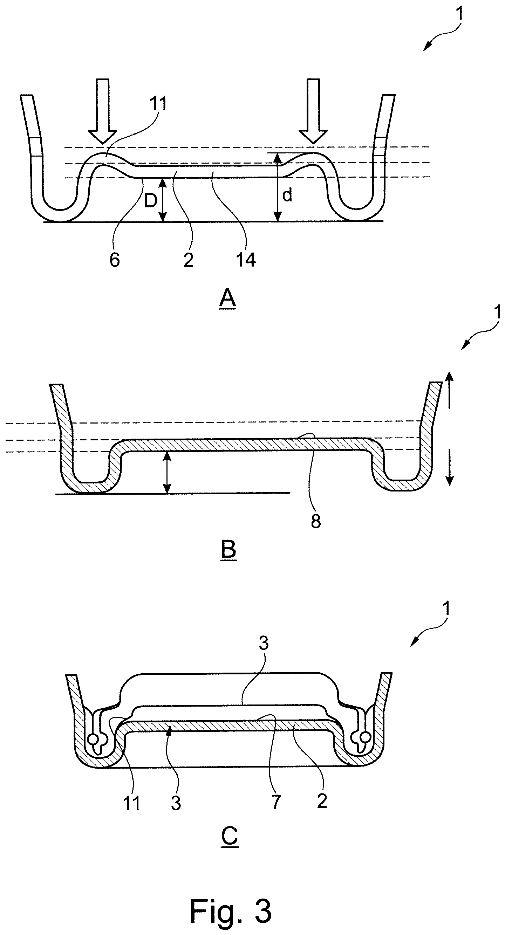

Fig. 3 zeigt die schematisch dargestellten Verfahrensschritte A bis C zur Fertigung einer Sammelplatte 1 mit Durchzügen 3.

Der Verfahrensschritt A umfasst dabei zumindest das Einformen bzw. Einbringen einer wannenförmigen Vertiefung 14 in die Sammelplatte 1 in Richtung des Rohrbündels unter gleichzeitiger Ausbildung der erhabenen Endbereiche 11. Die Vertiefung 14 befindet sich auf der Vorderseite 6 der Wand 2. Dabei kann beispielsweise D = 5 mm und d= 8 mm betragen.

In einem zweiten Verfahrensschritt B wird die zwischen zwei Durchzügen 3 verlaufende gerade Basisebene 8 durch bereichsweise Zurückformung der Vertiefung 14 ausgeformt. Im Bereich der erhöht verbleibenden Endbereiche 11 werden anschließend im Verfahrensschritt C die Durchzüge 3 eingeformt, wodurch sich auf der Rückseite 7 der Wand 2 die von Basisebene 8 erstreckenden Kragen 3 ergeben.

## Patentansprüche

1. Wärmetauscher vom Typ mit Sammelplatte (1), die eine Wand (2) aufweist, in der Durchzüge (3) eingebracht sind, die die Enden von Rohren (4) eines Bündels aufnehmen können, wobei die Wand (2) der Sammelplatte (1) so gestaltet ist, dass sie zum Zweck einer Löt- oder Schweißverbindung mit den Rohren (4) Kragen (5) um die Durchzüge (3) herum bildet, und wobei die Wand (2) eine dem Rohrbündel zugewandte Vorderseite (6) und eine dem Sammelbehälter zugewandte Rückseite (7) aufweist, wobei sich ein jeder Kragen (5) ausgehend von einer geraden Basisebene (8) auf der Rückseite (7) der Wand (2) in Richtung des Sammelbehälters erstreckt, **dadurch gekennzeichnet, dass** jeder Kragen (5) im Anlagebereich (9) der Rohrschmalseite (10) einen sich von der Basisebene (8) schräg nach oben und außen verlaufenden erhabenen Endbereich (11) auf der Rückseite (7) der Wand definiert, wobei sich durch den schräg nach oben und außen verlaufenden erhabenen Endbereich (11) auf der Rückseite (7) der Wand (2) eine gleichzeitige Vertiefung (12) des Endbereichs (11) gegenüber der ansonsten im Wesentlichen geraden Vorderseite (6) ergibt.

2. Wärmetauscher nach Anspruch 1, **dadurch gekennzeichnet, dass** sich durch das Einbringen der Durchzüge (3) im Anlagebereich zu den Rohren (4) eine Durchzugs-Kontakt-Fläche ausbildet, wobei die Durchzugs-Kontakt-Fläche zumindest geringfügig gekrümmt ausgebildet ist.

3. Wärmetauscher nach zumindest einem der Ansprüche 1 oder 2, **dadurch gekennzeichnet, dass** sich durch das Einbringen der Durchzüge (3) im Anlagebereich zu den Rohren (4) eine Durchzugs-Kontakt-Fläche ausbildet, wobei die Durchzugs-Kontakt-Fläche trapezförmig ausgebildet ist.

4. Verfahren zur Herstellung eines Wärmetauschers mit einer Sammelplatte (1) gemäß einem oder mehrerer der vorhergehenden Ansprüche, mit den Schritten:
- Einformen bzw. Einbringen einer wannenförmigen Vertiefung (14) in die Sammelplatte (1) in Richtung des Rohrbündels;
- Anschließendes Zurückformen zumindest eines Teilbereiches (Zwischenbereich 13) der Vertiefung (14) in Richtung Sammelbehälter;
- Abschließendes Einformen bzw. Einbringen der Durchzüge (3) in Richtung Sammelbehälter.

5. Verfahren zur Herstellung eines Wärmetauschers mit einer Sammelplatte (1) gemäß einem oder mehrerer der vorhergehenden Ansprüche 1 bis 3, mit den Schritten:
- Einformen bzw. Einbringen einer wannenförmigen Vertiefung (14) in die Sammelplatte (1) in Richtung der Rohrbündel;
- Anschließendes Einformen bzw. Einbringen der Durchzüge (3) in Richtung Sammelbehälter;
- Abschließendes Zurückformen zumindest eines Teilbereiches (Zwischenbereich 13) der Vertiefung (14) in Richtung Sammelbehälter.

6. Verfahren nach Anspruch 4, **dadurch gekennzeichnet, dass** im zweiten Verfahrensschritt lediglich die Ebene (Zwischenbereich 13) zwischen den Durchzügen (3) in Richtung Sammelbehälter zurückgeformt wird.

7. Verfahren nach Anspruch 5, **dadurch gekennzeichnet, dass** im dritten Verfahrensschritt lediglich die Ebene (Zwischenbereich 13) zwischen den Durchzügen in Richtung Sammelbehälter zurückgeformt wird.

8. Verfahren nach zumindest einem der vorhergehenden Ansprüche 4 bis 7, **dadurch gekennzeichnet, dass** sich durch das Zurückformen zumindest eines Zwischenbereiches (13) der wannenförmigen Vertiefung (14) die gerade verlaufende Basisebene (8) ausbildet.

## Claims

1. **H**eat exchanger of the type with collector plate (1), which has a wall (2), in which are introduced passages (3) which can accommodate the ends of tubes (4) of a bundle, wherein the wall (2) of the collector plate (1) is designed so that it forms collars (5) around the passages (3) for the purpose of a soldered or welded connection to the tubes (4), and wherein the wall (2) has a front side (6) which faces the tube bundle and a rear side (7) which faces the collecting vessel, wherein a collar (5) extends in each case from a rectilinear base plane (8) on the rear side (7) of the wall (2) in the direction of the collecting vessel, **characterised in that** each collar (5), in the contact region (9) of the tube narrow side (10), defines a raised end region (11) on the rear side (7) of the wall which extends obliquely upwards and outwards from the base plane (8), wherein as a result of the obliquely upwards and outwards extending raised end region (11) on the rear side (7) of the wall (2), a simultaneous recess (12) of the end region (11) in relation to the otherwise essentially rectilinear front side (6) is created.

2. **H**eat exchanger as claimed in claim 1, **characterised in that**, by introducing the passages (3) in the contact region for the tubes (4), a passage contact surface is formed, wherein the passage contact surface is of an at least slightly curved design.

3. **H**eat exchanger as claimed in at least one of claims 1 or 2, **characterised in that**, by introducing the passages (3) in the contact region for the tubes (4), a passage contact surface is formed, wherein the passage contact surface is of trapezoidal design.

4. **M**ethod for producing a heat exchanger with a collector plate (1) as claimed in one or more of the preceding claims, with the steps:
- forming or introducing a trough-like recess (14) in the collector plate (1) in the direction of the tube bundle;
- subsequent reverse forming of at least one section (intermediate region 13) of the recess (14) in the direction of the collecting vessel;
- final forming or introducing the passages (3) in the direction of the collecting vessel.

5. **M**ethod for producing a heat exchanger with a collector plate (1) as claimed in one or more of the preceding claims 1 to 3, with the steps:
- forming or introducing a trough-like recess (14) in the collector plate (1) in the direction of the tube bundle;
- subsequent forming or introducing the passages (3) in the direction of the collecting vessel;
- final reverse forming of at least one section (intermediate region 13) of the recess (14) in the direction of the collecting vessel.

6. **M**ethod as claimed in claim 4, **characterised in that** in the second method step only the plane (intermediate region 13) between the passages (3) in the direction of the collecting vessel is reverse formed.

7. **M**ethod as claimed in claim 5, **characterised in that** in the third method step only the plane (intermediate region 13) between the passages in the direction of the collecting vessel is reverse formed.

8. **M**ethod as claimed in at least one of the preceding claims 4 to 7, **characterised in that** as a result of the reverse forming of at least one intermediate region (13) of the trough-like recess (14), the rectilinearly extending base plane (8) is formed.

## Revendications

1. Echangeur de chaleur du type à plaque collectrice (1) qui présente une paroi (2) dans laquelle sont placés des passages (3) qui peuvent loger les extrémités de tubes (4) d'un faisceau, où la paroi (2) de la plaque collectrice (1) est configurée de manière telle, qu'elle forme des collerettes (5) tout autour des passages (3), lesdites collerettes servant à un assemblage brasé ou soudé avec les tubes (4), et où la paroi (2) présente une face avant (6) tournée vers le faisceau de tubes et une face arrière (7) tournée vers le bac collecteur, où chaque collerette (5) s'étend en direction du bac collecteur, à partir d'un plan de base rectiligne (8) situé sur la face arrière (7) de la paroi (2), **caractérisé en ce que** chaque collerette (5) définit dans la zone d'appui (9) du petit côté des tubes (10), une zone d'extrémité en relief (11) située sur la face arrière (7) de la paroi et s'étendant en oblique vers le haut et vers l'extérieur depuis le plan de base (8) où, en raison de la zone d'extrémité en relief (11) située sur la face arrière (7) de la paroi (2) et s'étendant en oblique vers le haut et vers l'extérieur, il en résulte une partie en creux (12) - formée en même temps - de la zone d'extrémité (11), par rapport à la face avant (6) au demeurant pratiquement rectiligne.

2. Echangeur de chaleur selon la revendication 1, **caractérisé en ce que**, par l'introduction des passages (3) dans la zone d'appui par rapport aux tubes (4), il se forme une surface de contact par rapport aux passages, où la surface de contact par rapport aux passages est formée en étant au moins légèrement recourbée.

3. Echangeur de chaleur selon au moins l'une des revendications 1 ou 2, **caractérisé en ce que**, par l'introduction des passages (3) dans la zone d'appui par rapport aux tubes (4), il se forme une surface de contact par rapport aux passages, où la surface de contact par rapport aux passages est configurée en forme de trapèze.

4. Procédé de fabrication d'un échangeur de chaleur comprenant une plaque collectrice (1) selon l'une quelconque ou plusieurs des revendications précédentes, comprenant les étapes :
- de moulage ou d'introduction, dans la plaque collectrice (1), d'une partie en creux (14) en forme de cuvette s'étendant en direction du faisceau de tubes ;
- de remodelage qui s'ensuit, modifiant la forme d'au moins une zone partielle (zone intermédiaire 13) de la partie en creux (14) s'étendant en direction du bac collecteur ;
- d'achèvement du moulage ou de l'introduction des passages (3) en direction du bac collecteur.

5. Procédé de fabrication d'un échangeur de chaleur comprenant une plaque collectrice (1) selon l'une quelconque ou plusieurs des revendications précédentes 1 à 3, comprenant les étapes :
- de moulage ou d'introduction, dans la plaque collectrice (1), d'une partie en creux (14) en forme de cuvette en direction des faisceaux de tubes ;
- de moulage ou d'introduction, qui s'ensuit, des passages (3) en direction du bac collecteur ;
- d'achèvement du remodelage modifiant la forme d'au moins une zone partielle (zone intermédiaire 13) de la partie en creux (14) s'étendant en direction du bac collecteur.

6. Procédé selon la revendication 4, **caractérisé en ce que**, au cours de la deuxième étape du procédé, on remodèle seulement la forme du plan (zone intermédiaire 13) compris entre les passages (3) en direction du bac collecteur.

7. Procédé selon la revendication 5, **caractérisé en ce que**, au cours de la troisième étape du procédé, on remodèle seulement la forme du plan (zone intermédiaire 13) compris entre les passages en direction du bac collecteur.

8. Procédé selon au moins l'une quelconque des revendications précédentes 4 à 7, **caractérisé en ce que** le plan de base (8) s'étendant de façon rectiligne se forme suite au remodelage de la forme d'au moins une zone intermédiaire (13) de la partie en creux (14) en forme de cuvette.
